# EUROPEAN PATENT SPECIFICATION

(11) **EP 3 086 927 B1**
(45) Date of publication and mention of the grant of the patent: **29.05.2019**
(21) Application number: 14833281.0
(22) Date of filing: 22.12.2014
(51) Int. Cl.: B29D 30/00, B29D 30/06, B05B 15/00, B29C 37/00, B05B 13/04, B05B 13/06, B05C 17/10

(54) **PROCESS AND APPARATUS FOR THE SURFACE TREATMENT OF GREEN TYRES**
VERFAHREN UND VORRICHTUNG ZUR OBERFLÄCHENBEHANDLUNG VON REIFENROHLINGEN
PROCÉDÉ ET APPAREIL POUR LE TRAITEMENT DE SURFACE DE PNEUS CRUS

(30) Priority: 23.12.2013 IT MI20132196
(43) Date of publication of application: 02.11.2016
(73) Proprietor: Pirelli Tyre S.p.A., 20126 Milano (IT)
(72) Inventor: BALIA, Stefano, I-20126 Milano (IT); MARCHINI, Maurizio, I-20126 Milano (IT); MANCINI, Gianni, I-20126 Milano (IT); BERENGUER, Albert, I-20126 Milano (IT)
(74) Representative: Vittorangeli, Lucia
(86) International application number: PCT/IB2014/067227
(87) International publication number: WO 2015/097645

(56) References cited:
- WO-A1-2008/068551
- DE-A1-102006 058 685
- JP-A- 2005 081 255
- US-A1- 2009 061 099
- US-A1- 2013 078 385
- US-B1- 7 122 220

## Description

The object of the present invention is a process and an apparatus for the surface treatment of green tyres.

A tyre for vehicle wheels generally comprises a carcass structure comprising at least one carcass ply made of elastomeric material reinforced with reinforcement cords lying in substantially radial planes (a radial plane contains the rotation axis of the tyre).

The tyre also comprises a crown structure comprising at least one belt layer situated in radially external position with respect to the carcass ply. The crown structure also comprises a tread band made of elastomeric material arranged radially external with respect to the belt layer. Respective sidewalls made of elastomeric material are also applied in axially external position on the lateral surfaces of the carcass structure, each extended from one of the lateral edges of the tread band up to the respective anchoring annular structure to the beads. In the tyres of "tubeless" type, an air-impermeable cover layer, normally termed "liner", covers the internal surfaces of the tyre.

Following the building of the green tyre actuated by means of assembly of respective components, a treatment of moulding and vulcanisation is generally executed aimed to determine the structural stabilisation of the tyre by means of cross-linking of the elastomeric compositions as well as impart a desired tread pattern thereon and possible distinctive graphic marks at the sidewalls of the tyre.

For such purpose, according to a type of method of green tyre moulding and vulcanisation termed "at set pressure", the green tyre is introduced into a suitably heated vulcanisation mould, having a countershaped moulding cavity pressed against the internal walls of said cavity by means of an expandable chamber (termed vulcanisation chamber).

After having executed the closure of the mould, said vulcanisation chamber, having a substantially toroidal conformation, is allowed to expand inside the tyre by means of insertion of pressurized vapour therein, so as to bring the membrane in contact with the internal surface of the tyre and compress the latter against the walls of the moulding cavity.

Upon completed vulcanisation, the mould is open to allow the removal of the tyre and to arrange the mould at a new cycle of vulcanisation.

In the above-described processes, prior to the vulcanisation step, surface treatments can be obtained that essentially consist of depositing suitable lubricant/release agents on the internal surfaces of the tyre and/or external surfaces of the vulcanisation chamber. Said agents are adapted to improve the interaction between the internal surface of the tyre and vulcanisation chamber during the process of vulcanisation and moulding, facilitating both the adaptation of the chamber to the tyre shape and the removal of the tyre at the end of vulcanisation.

By "elastomeric material" it is intended to indicate a composition comprising at least one elastomeric polymer and at least one reinforcement filler. Preferably, such composition also comprises additives such as, for example, a cross-linking agent and/or a plasticising agent. Due to the presence of the cross-linking agent, via heating, such material can be cross-linked by means of heating, so as to form the final manufactured product.

By "green tyre" it is indicated a tyre obtained from the building process and not yet moulded and vulcanised.

By "surface treatment of green tyres" it is intended the deposition of a treatment substance, in particular comprising lubricant/release agents, adapted to improve the interaction between the green tyre and the vulcanisation chamber during the process of vulcanisation and moulding. In particular the surface treatment can be carried out with permanent or semi-permanent treatment substances. By semi-permanent substances, substances are indicated that are at least partially transferred from the green tyre to the vulcanisation chamber.

With permanent treatment substances, substances are indicated that substantially remain on the surface of the green tyre to which they have been applied, even after a heat treatment.

By "surface to be treated", it is intended a surface of the tyre intended to receive a layer of treatment substance suitable for affecting the subsequent processes applied to the tyre. Preferably the surface to be treated is a radially internal surface of the tyre.

By "at low pressure" it is intended a pressure less than 1.5 bar (150 kPa). By "high pressure" it is intended a pressure greater than or equal to 1.5 bar (150 kPa).

By "model" of tyre it is intended the set of geometric characteristics (such as tread band width, sidewall height, fitting diameter), structural characteristics (such as single- or double-ply structure, radial-ply structure or cross-ply carcass, with or without belt structure, belt structure type - with belts crossed, at zero degrees, with belts crossed and at zero degrees-, type of tread band with one or more layers, etcetera) and technological characteristics (such as the blend of the various structural components, materials constituting the textile or metallic reinforcement cords, type of formation of the reinforcement cords, etcetera).

By "low-section tyre" it is intended a tyre having a reduced section ratio, i.e. wherein the section height, measured between the radially most external point of the tread band and the radially most internal point of the bead, is less than about 50% of the section width, measured axially at the point of maximum chord of the tyre.

By "vulcanisation line" it is intended a line comprising a plurality of vulcanisation moulds in which the green tyres are subjected to a moulding and vulcanisation treatment. Said plurality of moulds can comprise moulds of different size for the treatment of different tyre models.

The document US 2008/0264542 describes an apparatus and a system for spraying, under pressure, a lubricant agent on the internal surface of a green tyre. Such document describes the problems due to the use of lubricant agents which, used in tyres where the liner has a splice, penetrate into such interface zone of the material, involving a contamination of the material constituting the tyre and causing a deterioration thereof. Further apparatus and systems for spraying under pressure a lubricant agent on the internal surface of a green tyre are known from US2013/078385, US2009/061099 and JP2005/081255.

The described treatment substances, so-called permanent, have lubricant and release properties but remain on the surface of the tyre, or rather substantially they are not transferred to the vulcanisation chamber.

The Applicant has observed that, in the case of surfaces to be treated formed by means of deposition of continuous elongated elements, the permanent treatment substances applied by spraying under high pressure penetrate between the interstices present between a continuous elongated element and that adjacent, causing undesired alterations of the material constituting the internal surface of the tyre due to the rather aggressive nature of such treatment substances. In particular, it is possible that cracks form, with the consequent need to discard the finished product.

In addition to the above, the Applicant has observed that the spraying diffused at high pressure of the treatment substances generates a random diffusion of the substance on the surface to be treated, precluding the possibility of differentiating the deposition of the treatment substance in different zones of the same tyre and/or between different tyre models.

In particular, the Applicant has observed that the high pressure spraying treatments can have contraindications, when carried out on green tyres of low-section type. In such tyre type, the particular geometry of the surfaces in proximity of the bead zone makes it quite difficult to distribute the lubricant agent in a substantially uniform manner on the surfaces themselves. This can lead to obtaining a non-uniform distribution of the treatment substance on the internal surface of the tyre itself, involving poorly lubricated surface portions and/or portions with local accumulations of lubricant agent, with undesired consequences in the interaction between the vulcanisation chamber and the internal surface of the tyre, during the subsequent vulcanisation step.

The Applicant has perceived that a controlled application of treatment substances on the surface to be treated of the tyre would allow reducing the number of discarded tyres and would offer an unexpected versatility of distribution of the substances themselves, with the possibility of differentiation both between tyres of different models and, within the same tyre, between different surfaces to be treated.

The Applicant has also perceived that the use of semi-permanent treatment substances (e.g. silicone polymer based) involves the further advantage of indirectly treating the vulcanisation chamber by means of release thereon of part of the lubricant agents contained in the treatment substances themselves, improving the performances of the chambers and/or increasing their lifetime.

The Applicant has therefore perceived the need to obtain an automated system for treating the internal surface of a green tyre that allows controlling the distribution of the substances applied on the internal surface thereof.

The Applicant has finally found that by obtaining a treatment system comprising an application device for applying semi-permanent treatment substances operating at low pressure and controlling the movement of said application device relative to the internal surface of the green tyre, it is possible to correctly distribute the treatment substance and be able to manage different formulas with dedicated profiles and quantities of applied substance for each green tyre model.

In addition, the process is clean and allows making best use of the semi-permanent treatment substances, reducing the number of tyres discarded due to defects generated by the vulcanisation moulds.

More precisely, in accordance with a first aspect thereof, the invention relates to a process for the surface treatment of green tyres according to claim 1.

The process for the surface treatment comprises arranging a green tyre comprising at least one surface to be treated.

The process for the surface treatment comprises arranging an application device for applying a semi-permanent treatment substance.

The process for the surface treatment comprises generating a controlled relative movement between said green tyre and said application device.

The process for the surface treatment comprises applying, according to a predefined path, said treatment substance on said surface to be treated, by means of said application device.

According to claim 1 of the invention, applying said treatment substance comprises spraying, at a pressure less than 1.5 bar (150 kPa), said treatment substance on the surface to be treated and distributing the sprayed treatment substance on the surface to be treated.

More precisely, in accordance with a second aspect thereof, the invention relates to an apparatus for the surface treatment of green tyres according to claim 13.

The apparatus for the surface treatment comprises a support for a green tyre wherein said green tyre comprises at least one surface to be treated.

The apparatus for the surface treatment comprises an application device for applying a semi-permanent treatment substance comprising a nozzle configured for spraying, at a pressure less than 1.5 bar (150 kPa), said treatment substance on the surface to be treated and an applicator configured for distributing the sprayed treatment substance on the surface to be treated.

The apparatus for the surface treatment comprises a support element of said application device.

The apparatus for the surface treatment comprises devices for generating a controlled relative movement between said green tyre and said application device in a manner so as to apply said treatment substance on said surface to be treated according to a predefined path, by means of said application device.

In particular, the Applicant deems that the synergy generated by a controlled application operating under low pressure together with a use of semi-permanent substances allows obtaining a uniform distribution of the treatment substance, a high flexibility of the distribution of the substance and a controlled application, controlled in terms of quantity as well as mode of distribution in order to prevent infiltrations, e.g. between the continuous elongated elements.

The Applicant also deems that, due to controlled relative movements of the application device, one such precision level is obtained in the deposition of the semi-permanent treatment substance in order to be able to treat very delicate zones such as those adjacent to the bead or tyres normally deemed problematic such as low-section tyres, and be able to manage the quantity of treatment substance in different zones of the green tyre.

The present invention in at least one of the aforesaid aspects can have at least one of the following preferred characteristics.

Preferably provision is made for spraying at a pressure less than or equal to about 1.1 bar (110 kPa) said treatment substance on the surface to be treated.

Preferably provision is made for spraying at a pressure greater than or equal to about 0.5 bar (50 kPa) said treatment substance on the surface to be treated.

Preferably at least 15% of said semi-permanent substances are transferred from the surface of the green tyre to the surface of the vulcanisation chamber, following a process of vulcanisation of the tyre itself.

Preferably provision is made for setting said predefined application path as a function of one or more from among the following: the quantity of substance to be applied, the type of surface to be treated, the position of the surface to be treated, the model of green tyre.

Preferably provision is made for reading a bar code present on the tyre and identifying characteristics of the tyre itself, wherein said predefined path is set as a function of said characteristics of the tyre following the reading of said bar code.

Preferably provision is made for positioning, in contact with said surface to be treated, an applicator of said application device configured for distributing the sprayed treatment substance.

Preferably provision is made for positioning said application device at a specific application distance from said surface to be treated of the green tyre, suitable for placing, in contact with said surface to be treated, an applicator of said application device configured for distributing the sprayed treatment substance.

Preferably provision is made for positioning, at a specific spraying distance from said surface to be treated, a nozzle of said application device configured for spraying said treatment substance at low pressure. Preferably provision is made for positioning said application device at a specific application distance from said surface to be treated, suitable for placing, at a specific spraying distance from said surface to be treated, a nozzle of said application device configured for spraying said treatment substance at low pressure.

Preferably provision is made for setting the spraying distance of said nozzle from said surface to be treated as a function of one or more from among the following: the quantity of substance to be applied, the type of surface to be treated, the position of the surface to be treated, the model of green tyre.

Preferably generating a controlled relative movement between said green tyre and said application device comprises generating a relative rotation of said green tyre and said application device around a rotation axis of the green tyre.

Preferably generating a relative rotation of said green tyre and said application device comprises placing said green tyre in rotation around a rotation axis thereof and/or place said application device in rotation around a rotation axis of said green tyre.

Preferably spraying, at low pressure, said treatment substance on the surface to be treated precedes distributing the sprayed treatment substance on the surface to be treated according to a relative movement direction of said application device with respect to said green tyre during said relative rotation.

Preferably generating a controlled relative movement between said green tyre and said application device comprises generating a relative advancing of said application device and said green tyre having at least one local advancing speed component parallel to a rotation axis of the green tyre. Preferably said local advancing speed component parallel to a rotation axis of the green tyre has an advancing direction coinciding with a direction of deposition of a continuous elongated element of a component of said green tyre which forms the surface to be treated.

Preferably provision is made for setting said local advancing speed component as a function of one or more from among the following: the quantity of substance to be applied, the type of surface to be treated, the position of the surface to be treated, the model of green tyre.

Preferably said surface to be treated is a radially internal surface of said green tyre.

Preferably said radially internal surface of said green tyre comprises un liner obtained by means of the deposition of continuous elongated elements which are in mutually side-by-side relationship on a forming drum.

Preferably said nozzle and said applicator are integral with each other at least in the controlled relative movement generated between said green tyre and said application device.

Preferably said nozzle is configured for spraying at a pressure less than or equal to about 1.1 bar (110 kPa)said treatment substance on the surface to be treated.

Preferably said nozzle is configured for spraying at a pressure greater than or equal to about 0.5 bar (50 kPa)said treatment substance on the surface to be treated.

Preferably said support element comprises a support bracket on which said nozzle and said applicator are mounted, said nozzle being arranged on the front part of said applicator according to a relative movement direction of said application device with respect to said green tyre during a relative rotation of said tyre and said application device.

Preferably said support element is configured for positioning said application device at a specific application distance from said surface to be treated of the green tyre.

Preferably a control unit is provided that is operatively connected to said support element and programmed for setting the application distance of said application device from said surface to be treated as a function of one or more from among the following: the quantity of substance to be applied, the type of surface to be treated, the position of the surface to be treated, the model of green tyre.

Preferably said support element comprises first regulation devices configured for positioning said nozzle at a specific spraying distance from said surface to be treated.

Preferably said support element comprises second regulation devices configured for positioning said applicator in contact with said surface to be treated.

Preferably said first and second regulation devices at least partially coincide.

Preferably a control unit is provided that is operatively connected to said support element and to said first and second regulation devices and programmed for setting the spraying distance of said nozzle from said surface to be treated as a function of one or more from among the following: the quantity of substance to be applied, the type of surface to be treated, the position of the surface to be treated, the model of green tyre. Preferably said support element comprises an anthropomorphic robot. Preferably a control unit is provided that is operatively connected to said support element and to said devices for generating a controlled relative movement between said green tyre and said application device and programmed for setting said predefined path as a function of one or more from among the following: the quantity of substance to be applied, the type of surface to be treated, the position of the surface to be treated, the model of green tyre.

Preferably said devices for generating a controlled relative movement between said green tyre and said application device comprise devices for generating a relative rotation of said green tyre and said application device around a rotation axis of the green tyre.

Preferably said devices for generating a relative rotation of said green tyre and said application device comprise said support comprising a support tray configured for receiving said tyre and placing it in rotation around said rotation axis of the green tyre at a specific rotation speed.

Preferably a control unit is provided that is operatively connected to said support tray and programmed for setting said rotation speed as a function of one or more from among the following: the quantity of substance to be applied, the type of surface to be treated, the position of the surface to be treated, the type of green tyre.

Preferably said devices for generating a controlled relative movement between said green tyre and said application device comprise devices for generating a relative advancing of said application device and said green tyre having at least one local advancing speed component parallel to a rotation axis of the green tyre.

Preferably said devices for generating a relative advancing of said application device and said green tyre comprise said support element, for example obtained as an anthropomorphic robot.

Preferably a control unit is provided that is operatively connected to said devices for generating a relative advancing of said application device and said green tyre and programmed for setting said local advancing speed component parallel to a rotation axis of the green tyre as a function of one or more from among the following: the quantity of substance to be applied, the type of surface to be treated, the position of the surface to be treated, the type of green tyre.

Preferably said support element is configured for positioning said application device within the green tyre.

Further characteristics and advantages of the present invention will be clearer from the exemplifying and non-limiting description of a preferred but not exclusive embodiment of a process and an apparatus for the surface treatment of green tyres, as illustrated in the enclosed drawings in which:

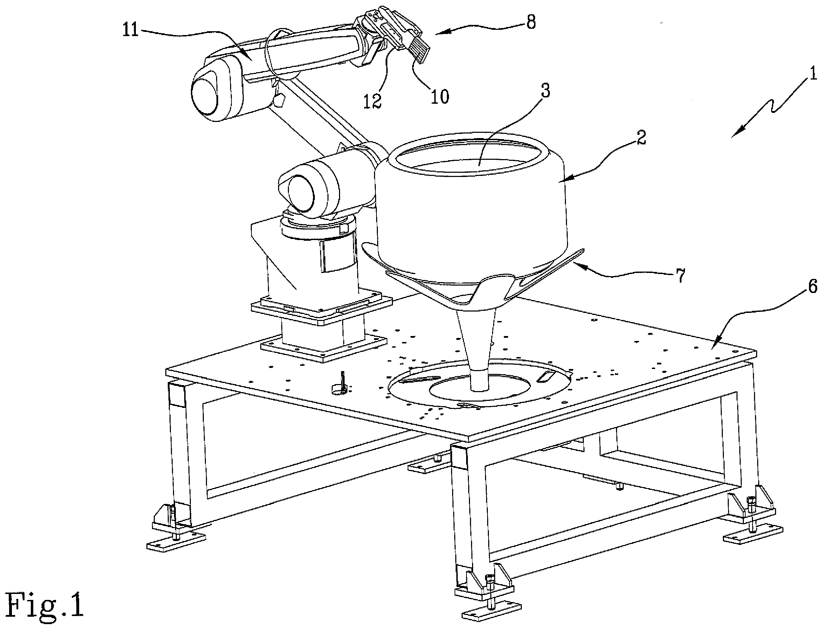

- figure 1 is a perspective schematic view of an apparatus for the surface treatment of green tyres according to the present invention;

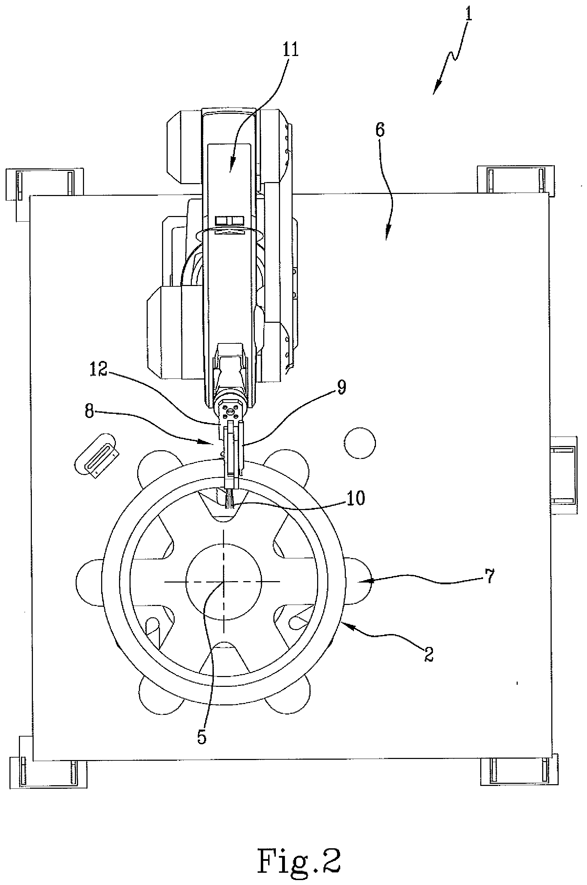

- figure 2 is a top schematic view of the apparatus for the surface treatment of green tyres of figure 1;
- figure 3 is a side schematic view of the apparatus for the surface treatment of green tyres of figure 1;

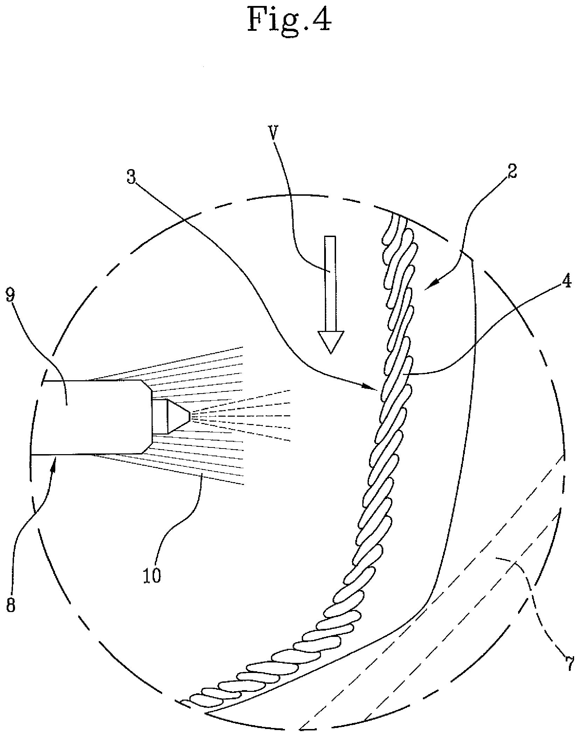

- figure 4 is an enlarged, sectional schematic view of a detail of figure 3.

With reference to the enclosed figures, reference number 1 indicates overall an apparatus for the surface treatment of green tyres. Indicated with 2 is a green tyre to be treated. In particular, indicated with 3 is a surface to be treated of the green tyre 2. Preferably the surface to be treated 3 is a radially internal surface of the green tyre 2. Still more preferably the surface to be treated 3 is a radially internal surface of the green tyre 2 comprising a liner obtained by means of the deposition of continuous elongated elements 4 which are in mutually side-by-side relationship on a forming drum (not illustrated).

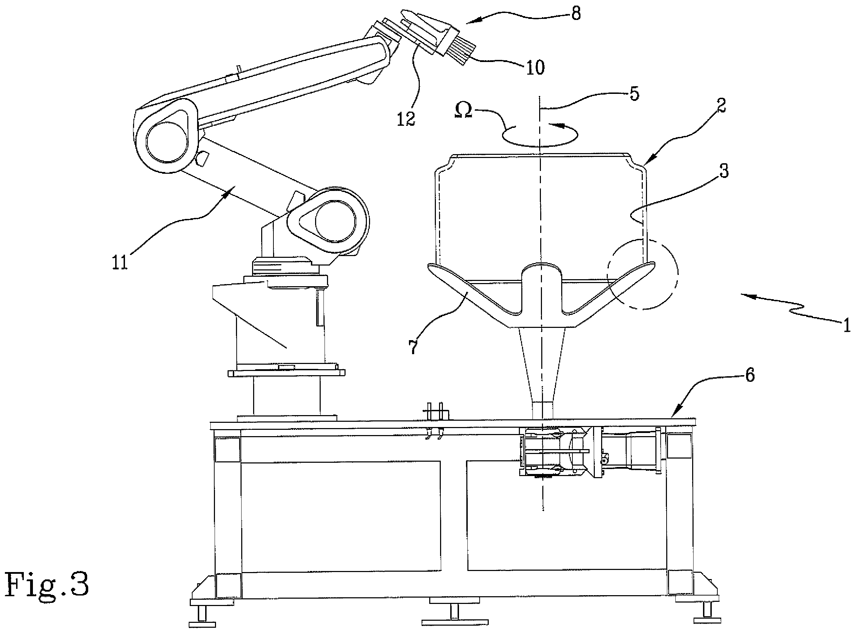

With reference to figure 3, 5 indicates a rotation axis of the green tyre 2. In particular, figure 3 illustrates a preferred position of the green tyre 2 inside the apparatus for the surface treatment 1, arranged with vertical rotation axis 5.

In particular the apparatus 1 comprises a support 6 for the green tyre 2. The support 6 can comprise a support tray 7 configured for receiving the green tyre 2. Preferably the support tray 7 defines a receiving cradle having frustoconical shape in which the green tyre 2 can be housed and retained in simple abutment, without requiring further grip means.

The apparatus 1 also comprises an application device 8 suitable for applying a semi-permanent treatment substance on the surface to be treated 3.

In accordance with a possible embodiment of the invention, with regard to which the enclosed figures can constitute an exemplifying representation, the application device 8 comprises a nozzle 9 configured for spraying, at low pressure, the semi-permanent treatment substance on the surface to be treated 3. Preferably the nozzle 9 is configured for spraying, at a pressure less than 1.1 bar (110 kPa), the treatment substance on the surface to be treated 3. Still more preferably the nozzle is also configured for spraying at a pressure greater than or equal to 0.5 bar (50 kPa) the treatment substance on the surface to be treated 3.

In accordance with a possible embodiment of the invention, with regard to which the enclosed figures can constitute an exemplifying representation, the application device 8 comprises an applicator 10 configured for distributing the semi-permanent sprayed treatment substance on the surface to be treated 3. Preferably the applicator 10 is obtained in brush form.

Preferably the apparatus 1 comprises a support element 11 for the application device 8. For example, the support element 11 can comprise a support bracket 12 on which the nozzle 9 and the applicator 10 are mounted. The relative arrangement of the nozzle 9 and the applicator 10 on the support element 11, in particular on the support bracket 12 if present, is such that the applicator 10 can distribute the semi-permanent sprayed treatment substance on the surface to be treated 3 from the nozzle 9.

In accordance with a possible embodiment of the invention, the support element 11 is configured for positioning the application device 8 at a specific application distance from the surface to be treated 3 of the green tyre 2. Preferably the support element 11 is configured for positioning the application device 8 within the green tyre 2.

In accordance with a possible embodiment of the invention, with regard to which the enclosed figures can constitute an exemplifying representation, the support element 11 comprises an anthropomorphic robot. In particular the anthropomorphic robot is configured and controlled for positioning the application device 8 at a specific application distance from the surface to be treated 3 of the green tyre 2 (preferably within the green tyre 2).

The apparatus 1 comprises advantageously devices for generating a controlled relative movement between the green tyre 2 and the application device 8 in a manner so as to apply the treatment substance on the surface to be treated 3 according to a predefined path, by means of the application device 8. Such devices for generating a controlled relative movement will be described in detail in the following present description.

In accordance with a possible embodiment of the invention, with regard to which the enclosed figures can constitute an exemplifying representation, the nozzle 9 and the applicator 10 are integral with each other at least in the controlled relative movement generated between the green tyre 3 and the application device 8.

Preferably the nozzle 9 and the applicator 10 are arranged on the support element 11, in particular on the support bracket 12 if provided, in a manner such that the nozzle 9 is arranged on the front part of the applicator 10 according to a relative movement direction of the application device 8 with respect to the green tyre 2, in particular during a relative rotation of the green tyre 3 and the application device 8. According to the embodiment illustrated for example in the figures, the nozzle 9 and the applicator 10 are mounted fixed and integral together on the support element 11, preferably on the support bracket 12. In this case, the support element 11, in particular the anthropomorphic robot, defines both first regulation devices configured for positioning the nozzle 9 at a specific spraying distance from the surface to be treated 3, and second regulation devices configured for positioning the applicator 10 in contact with the surface to be treated 3. In other words, the first and second regulation devices coincide and are configured in the support element 11, in particular in the anthropomorphic robot, suitably moved.

In accordance with a possible embodiment, not shown, the support element 11 can comprise first regulation devices, structurally and functionally separate from the support element itself, and configured for positioning the nozzle 9 at a specific spraying distance from the surface to be treated 3. For example, one or more actuators can be provided that are interposed between the nozzle 9 and the support element 11, e.g. the support bracket 12 if present.

In accordance with a possible embodiment, not shown, the support element 11 can comprise second regulation devices, structurally and functionally separated from the support element itself, and configured for positioning the applicator 10 in contact with the surface to be treated 3. For example, one or more actuators can be provided that are interposed between the nozzle 9 and the support element 11, e.g. the support bracket 12 if present.

Preferably the first and second regulation devices can at least partially coincide. In particular one or more actuators can be provided, interposed between the support bracket 12 and the support element 11.

In accordance with a possible embodiment of the invention, with regard to which the enclosed figures can constitute an exemplifying representation, the devices for generating a controlled relative movement between the green tyre 2 and the application device 8 can comprise devices for generating a relative rotation of the green tyre 2 and the application device 8 around the rotation axis 5 of the green tyre 2. For example, the devices for generating the relative rotation between the green tyre 2 and the application device 8 can comprise the support 6, in particular the support tray 7 suitably figured not only for receiving the green tyre 2, but also for placing it in rotation around the rotation axis 5 at a specific rotation speed Ω. A motor, not shown, is operatively connected with the tray 5 in order to drive it in rotation around the rotation axis 5.

In accordance with a possible embodiment of the invention, with regard to which the enclosed figures can constitute an exemplifying representation, the devices for generating a controlled relative movement between the green tyre 2 and the application device 8 can comprise devices for generating a relative advancing of the application device 8 and the green tyre 2. Preferably such relative advancing has at least one local advancing speed component V parallel to the rotation axis 5 of the green tyre 2. According to the illustrated embodiment, the devices for generating a relative advancing of the application device 8 and the green tyre 2 comprise the support element 11, in particular the anthropomorphic robot, suitably moved.

In accordance with that illustrated, both the devices for generating a relative rotation of the green tyre 2 and the application device 8 around the rotation axis 5 of the green tyre 2, and the devices for generating a relative advancing of the application device 8 and the green tyre 2, can be simultaneously provided. In this case, the predefined path is a path consisting of the rotation around the rotation axis 5 and the translation parallel to the rotation axis 5.

In accordance with a possible embodiment, the apparatus 1 comprises a control unit, not shown, possibly provided with plurality of control modules, for example defined by the functionality of the control unit itself.

Preferably a control unit can be provided that is operatively connected to one or more from among the following: support element 11, first and second regulation devices if present, devices for generating a controlled relative movement between the green tyre 2 and the application device 8, devices for generating a relative rotation of the green tyre 2 and the application device 8 around the rotation axis 5 of the green tyre 2, support tray 7, devices for generating a relative advancing of the application device 8 and the green tyre 2.

Preferably such control unit is programmed for executing one or more of the following actions:
setting the application distance of the application device 8 from the surface to be treated 3,
setting the spraying distance of the nozzle 9 from the surface to be treated 3,
setting the predefined path,
setting the rotation speed Ω,
setting the local advancing speed component V parallel to the rotation axis 5 of the green tyre 5.

Such actions are preferably performed as a function of one or more from among the following: the quantity of substance to be applied, the type of surface to be treated 3, the position of the surface to be treated 3, the model of green tyre 2.

In accordance with one aspect, the present invention relates to a process for the surface treatment of green tyres. Such process for the surface treatment can for example be executed by means of an apparatus 1 as previously described. Hereinbelow, the process for the surface treatment will for the sake of simplicity be described with reference to the apparatus 1 illustrated in the enclosed figures, even if it can be executed on different apparatuses.

Preferably the process for the surface treatment provides for arranging the green tyre 2 comprising the surface to be treated 3 and the application device 8 for applying the semi-permanent treatment substance.

In particular the green tyre 2 is housed in the support tray 7, preferably with vertical rotation axis 5, and the application device 8 is arranged on top thereof.

The process according to the invention provides for generating a controlled relative movement between the green tyre 2 and the application device 8. The treatment substance is applied on the surface to be treated 3 according to a predefined path. The application occurs by means of the application device 8.

Preferably generating a controlled relative movement between the green tyre 2 and the application device 8 comprises generating a relative rotation of the green tyre 2 and the application device 8 around the rotation axis 5 of the green tyre 2. In particular generating a relative rotation of the green tyre 2 and the application device 8 can comprise placing the green tyre in rotation around the rotation axis 5 thereof and/or placing the application device 8 in rotation around the rotation axis 5 of the green tyre 2. Advantageously the application of the treatment substance provides for spraying, at low pressure, the treatment substance on the surface to be treated 3, for example by means of the nozzle 9, and distributing the sprayed treatment substance on the surface to be treated 3, for example by means of the applicator 10.

Preferably provision is made for spraying the treatment substance on the surface to be treated 3 at a pressure less than 1.1 bar (110 kPa) and greater than or equal to 0.5 bar (50 kPa).

If a relative rotation of the green tyre 2 and the application device 8 is applied, low-pressure spraying of the treatment substance on the surface to be treated 3 can precede the distribution of the sprayed treatment substance on the surface to be treated 3 according to a relative movement direction of the application device 8 with respect to the green tyre 2 during the relative rotation.

Preferably generating a controlled relative movement between the green tyre 2 and the application device 8 comprises generating a relative advancing of the application device 8 and the green tyre 8 having at least one local advancing speed component V parallel to the rotation axis 5 of the green tyre 2. If the surface to be treated 3 is formed by a component of the tyre obtained by means of deposition of a continuous elongated element 4, the local advancing speed component V parallel to a rotation axis of the green tyre has an advancing direction coinciding with the direction of deposition of the continuous elongated element 4.

Preferably before the application of the treatment substance, the applicator 10 configured for distributing the sprayed treatment substance is placed in contact with the surface to be treated 3. Such arrangement can be obtained by positioning the application device 8 at a specific application distance from the surface to be treated 3 suitable for placing the applicator 11 in contact with the surface to be treated 3.

Preferably before the application of the treatment substance, the nozzle 9 is placed at a specific spraying distance from the surface to be treated 3. Such arrangement can be obtained by positioning the application device 8 at a specific application distance from the surface to be treated 3, suitable for placing the nozzle 9 at a specific spraying distance from the surface to be treated 3.

The above-described process can provide for setting one or more parameters as a function of one or more from among the following: the quantity of substance to be applied, the type of surface to be treated 3, the position of the surface to be treated 3, the model of green tyre 2. Such parameters can comprise one or more from among the following: the predefined application path, the application distance of the application device 8, the spraying distance of the nozzle 9, the local advancing speed component V, the rotation speed Ω.

Preferably provision can be made for reading a bar code present on the green tyre 2 and identifying characteristics of the tyre itself, and setting one or more of the aforesaid parameters as a function of the characteristics of the tyre following the reading of the bar code.

Preferably at least 15% of said semi-permanent substances are transferred from the surface of the green tyre to the surface of the vulcanisation chamber, following a process of vulcanisation of the tyre itself.

## Claims

1. A process for the surface treatment of green tyres (2) comprising:
arranging a green tyre (2) comprising at least one surface to be treated (3),
arranging an application device (8) suitable for applying a semi-permanent treatment substance,
generating a controlled relative movement between said green tyre (2) and said application device (8),
applying, according to a predefined path, said treatment substance on said surface to be treated (3), by means of said application device (8), wherein
applying said treatment substance comprises spraying, at a pressure less than 1.5 bar (150 kPa), said treatment substance on the surface to be treated (3) and distributing the sprayed treatment substance on the surface to be treated (3).

2. A process for the surface treatment of green tyres as claimed in claim 1, comprising spraying, at a pressure less than or equal to 1.1 bar (110 kPa), said treatment substance on the surface to be treated (3).

3. A process for the surface treatment of green tyres as claimed in claim 2, comprising spraying, at a pressure greater than or equal to 0.5 bar (50 kPa), said treatment substance on the surface to be treated (3).

4. A process for the surface treatment of green tyres as claimed in claim 1, comprising setting said predefined application path as a function of one or more from among the following: the quantity of substance to be applied, the type of surface to be treated (3), the position of the surface to be treated (3), the model of green tyre.

5. A process for the surface treatment of green tyres as claimed in claim 4, comprising reading a bar code present on the green tyre (2) and identifying characteristics of the tyre itself, wherein said predefined path is set as a function of said characteristics of the green tyre (2) following the reading of said bar code.

6. A process for the surface treatment of green tyres as claimed in claim 1, comprising positioning, in contact with said surface to be treated (3), an applicator (10) of said application device (8) configured for distributing the sprayed treatment substance.

7. A process for the surface treatment of green tyres as claimed in claim 1, comprising positioning said application device (8) at a specific application distance from said surface to be treated (3) of the green tyre (2), suitable for placing in contact with said surface to be treated (3) an applicator (10) of said application device (8) configured for distributing the sprayed treatment substance.

8. A process for the surface treatment of green tyres as claimed in claim 1, comprising positioning, at a specific spraying distance from said surface to be treated (3), a nozzle (9) of said application device (8) configured for spraying said treatment substance at low pressure.

9. A process for the surface treatment of green tyres as claimed in claim 1, comprising positioning said application device (8) at a specific application distance from said surface to be treated (3) suitable for placing, at a specific spraying distance from said surface to be treated (3), a nozzle (9) of said application device (10) configured for spraying said treatment substance at low pressure.

10. A process for the surface treatment of green tyres as claimed in claim 8 or 9, comprising setting the spraying distance of said nozzle (9) from said surface to be treated (3) as a function of one or more from among the following: the quantity of substance to be applied, the type of surface to be treated (3), the position of the surface to be treated (3), the model of green tyre.

11. A process for the surface treatment of green tyres as claimed in claim 1, wherein generating a controlled relative movement between said green tyre (2) and said application device (8) comprises generating a relative advancing of said application device (8) and said green tyre (2) having at least one local advancing speed component (V) parallel to a rotation axis (5) of the green tyre (2) and wherein said local advancing speed component (V) parallel to a rotation axis (5) of the green tyre (2) has an advancing direction coinciding with a direction of deposition of a continuous elongated element (4) of a component of said green tyre (2) which forms the surface to be treated (3).

12. A process for the surface treatment of green tyres as claimed in claim 1, wherein said surface to be treated (3) is a radially internal surface of said green tyre (2) comprising a liner obtained by means of the deposition of continuous elongated elements (4) which are in mutually side-by-side relationship on a forming drum.

13. An apparatus for the surface treatment (1) of green tyres comprising:
a support (6) for a green tyre (2) wherein said green tyre (2) comprises at least one surface to be treated (3),
an application device (8) suitable for applying a semi-permanent treatment substance,
a support element (11) for said application device (8),
devices for generating a controlled relative movement between said green tyre (2) and said application device (8) in a manner so as to apply said treatment substance on said surface to be treated according to a predefined path, by means of said application device,
wherein said application device (8) comprises a nozzle (9) configured for spraying, at a pressure less than 1.5 bar (150 kPa), said treatment substance on the surface to be treated (3) and an applicator (10) configured for distributing the sprayed treatment substance on the surface to be treated (3).

14. An apparatus for the surface treatment of green tyres as claimed in claim 13, wherein said nozzle (9) and said applicator (10) are integral with each other at least in the controlled relative movement generated between said green tyre (2) and said application device (8).

15. An apparatus for the surface treatment of green tyres as claimed in claim 13, wherein said support element (11) comprises a support bracket (12) on which said nozzle (9) and said applicator (10) are mounted, said nozzle (9) being arranged on the front part of said applicator (10) according to a relative movement direction of said application device (8) with respect to said green tyre (2) during a relative rotation of said green tyre (2) and said application device (8).

## Patentansprüche

1. Verfahren für die Oberflächenbehandlung von Rohreifen (2), umfassend:
Anordnen eines Rohreifens (2) umfassend zumindest eine zu behandelnde Oberfläche (3),
Anordnen einer Auftragvorrichtung (8), die dazu geeignet ist, eine semipermanente Behandlungssubstanz aufzutragen,
Erzeugen einer gesteuerten Relativbewegung zwischen dem Rohreifen (2) und der Auftragvorrichtung (8),
Auftragen der Behandlungssubstanz in Übereinstimmung mit einem vordefinierten Pfad auf die zu behandelnde Oberfläche (3) mittels der Auftragvorrichtung (8), wobei das Auftragen der Behandlungssubstanz das Aufsprühen der Behandlungssubstanz auf die zu behandelnde Oberfläche (3) bei einem Druck unter 1,5 bar (150 kPa) und das Verteilen der aufgesprühten Behandlungssubstanz auf der zu behandelnden Oberfläche (3) umfasst.

2. Verfahren für die Oberflächenbehandlung von Rohreifen nach Anspruch 1, umfassend das Aufsprühen der Behandlungssubstanz auf die zu behandelnde Oberfläche (3) bei einem Druck unter oder gleich 1,1 bar (110 kPa).

3. Verfahren für die Oberflächenbehandlung von Rohreifen nach Anspruch 2, umfassend das Aufsprühen der Behandlungssubstanz auf die zu behandelnde Oberfläche (3) bei einem Druck von über oder gleich 0,5 bar (50 kPa).

4. Verfahren für die Oberflächenbehandlung von Rohreifen nach Anspruch 1, umfassend das Festlegen des vordefinierten Auftragpfads als eine Funktion eines oder mehrerer der folgenden Faktoren: der Menge der aufzutragenden Substanz, des Typs der zu behandelnden Oberfläche (3), der Position der zu behandelnden Oberfläche (3), des Modells des Rohreifens.

5. Verfahren für die Oberflächenbehandlung von Rohreifen nach Anspruch 4, umfassend das Lesen eines auf dem Rohreifen (2) vorhandenen Barcodes und das Identifizieren von Eigenschaften des Reifens selbst, wobei der vordefinierte Pfad als eine Funktion der Eigenschaften des Rohreifens (2) auf das Lesen des Barcodes folgend festgelegt wird.

6. Verfahren für die Oberflächenbehandlung von Rohreifen nach Anspruch 1, umfassend das Positionieren eines Applikators (10) der Auftragvorrichtung (8), der zur Verteilung der aufgesprühten Behandlungssubstanz ausgestaltet ist, in Kontakt mit der zu behandelnden Oberfläche (3).

7. Verfahren für die Oberflächenbehandlung von Rohreifen nach Anspruch 1, umfassend das Positionieren der Auftragvorrichtung (8) in einem spezifischen Auftragsabstand von der zu behandelnden Oberfläche (3) des Rohreifens (2), der dazu geeignet ist, einen Applikator (10) der Auftragvorrichtung (8), der zur Verteilung der aufgesprühten Behandlungssubstanz ausgestaltet ist, in Kontakt mit der zu behandelnden Oberfläche (3) zu positionieren.

8. Verfahren für die Oberflächenbehandlung von Rohreifen nach Anspruch 1, umfassend das Positionieren einer Düse (9) der Auftragvorrichtung (8), die zum Aufsprühen der Behandlungssubstanz mit einem niedrigen Druck ausgestaltet ist, in einem spezifischen Aufsprühabstand von der zu behandelnden Oberfläche (3).

9. Verfahren für die Oberflächenbehandlung von Rohreifen nach Anspruch 1, umfassend das Positionieren der Auftragvorrichtung (8) in einem spezifischen Auftragsabstand von der zu behandelnden Oberfläche (3), der dazu geeignet ist, eine Düse (9) der Auftragvorrichtung (10), die zum Aufsprühen der Behandlungssubstanz mit einem niedrigen Druck ausgestaltet ist, in einem spezifischen Aufsprühabstand von der zu behandelnden Oberfläche (3) zu positionieren.

10. Verfahren für die Oberflächenbehandlung von Rohreifen nach Anspruch 8 oder 9, umfassend das Festlegen des Aufsprühabstands der Düse (9) von der zu behandelnden Oberfläche (3) als eine Funktion eines oder mehrerer der folgenden Faktoren: der Menge der aufzutragenden Substanz, des Typs der zu behandelnden Oberfläche (3), der Position der zu behandelnden Oberfläche (3), des Modells des Rohreifens.

11. Verfahren für die Oberflächenbehandlung von Rohreifen nach Anspruch 1, wobei das Erzeugen einer gesteuerten Relativbewegung zwischen dem Rohreifen (2) und der Auftragvorrichtung (8) das Erzeugen eines relativen Vorschubs der Auftragvorrichtung (8) und des Rohreifens (2) mit zumindest einer lokalen Vorschubgeschwindigkeitskomponente (V) parallel zu einer Drehachse (5) des Rohreifens (2) umfasst, und wobei die lokale Vorschubgeschwindigkeitskomponente (V) parallel zu einer Drehachse (5) des Rohreifens (2) eine Vorschubrichtung aufweist, die mit einer Ablegerichtung eines durchgehenden länglichen Elements (4) einer Komponente des Rohreifens (2), welche die zu behandelnde Oberfläche (3) bildet, zusammenfällt.

12. Verfahren für die Oberflächenbehandlung von Rohreifen nach Anspruch 1, wobei die zu behandelnde Oberfläche (3) eine radial innere Oberfläche des Rohreifens (2) ist, umfassend einen Mantel, der mittels Ablegen durchgehender länglicher Elemente (4) erhalten wird, die in einer Beziehung Seite an Seite an einer Formungstrommel stehen.

13. Vorrichtung für die Oberflächenbehandlung (1) von Rohreifen, umfassend: einen Träger (6) für einen Rohreifen (2), wobei der Rohreifen (2) zumindest eine zu behandelnde Oberfläche (3) umfasst,
eine Auftragvorrichtung (8), die dazu geeignet ist, eine semipermanente Behandlungssubstanz aufzutragen,
ein Trägerelement (11) für die Auftragvorrichtung (8), Vorrichtungen zum Erzeugen einer gesteuerten Relativbewegung zwischen dem Rohreifen (2) und der Auftragvorrichtung (8) auf eine Weise, um die Behandlungssubstanz auf die zu behandelnde Oberfläche in Übereinstimmung mit einem vordefinierten Pfad mittels der Auftragvorrichtung aufzutragen,
wobei die Auftragvorrichtung (8) eine Düse (9) umfasst, die dazu ausgestaltet ist, die Behandlungssubstanz bei einem Druck unter 1,5 bar (150 kPa) auf die zu behandelnde Oberfläche (3) aufzusprühen, und einen Applikator (10), der dazu ausgestaltet ist, die aufgesprühte Behandlungssubstanz auf der zu behandelnden Oberfläche (3) zu verteilen.

14. Vorrichtung für die Oberflächenbehandlung von Rohreifen nach Anspruch 13, wobei die Düse (9) und der Applikator (10) zumindest in Bezug auf die gesteuerte Relativbewegung, die zwischen dem Rohreifen (2) und der Auftragvorrichtung (8) erzeugt wird, einteilig sind.

15. Vorrichtung für die Oberflächenbehandlung von Rohreifen nach Anspruch 13, wobei das Trägerelement (11) eine Traghalterung (12) umfasst, auf welcher die Düse (9) und der Applikator (10) montiert sind, wobei die Düse (9) an dem vorderen Teil des Applikators (10) in Übereinstimmung mit einer relativen Bewegungsrichtung der Auftragvorrichtung (8) in Bezug auf den Rohreifen (2) während einer relativen Drehung des Rohreifens (2) und der Auftragvorrichtung (8) angeordnet ist.

## Revendications

1. Procédé pour le traitement de surface de pneus crus (2) comprenant le fait :
d'agencer un pneu cru (2) comprenant au moins une surface à traiter (3),
d'agencer un dispositif d'application (8) approprié pour appliquer une substance de traitement semi-permanente,
de générer un mouvement relatif commandé entre ledit pneu cru (2) et ledit dispositif d'application (8),
d'appliquer, selon une trajectoire prédéfinie, ladite substance de traitement sur ladite surface à traiter (3), au moyen dudit dispositif d'application (8), où l'application de ladite substance de traitement comprend la pulvérisation, à une pression inférieure à 1,5 bar (150 kPa), de ladite substance de traitement sur la surface à traiter (3) et la distribution de la substance de traitement pulvérisée sur la surface à traiter (3).

2. Procédé pour le traitement de surface de pneus crus tel que revendiqué dans la revendication 1, comprenant la pulvérisation, à une pression inférieure ou égale à 1,1 bar (110 kPa), de ladite substance de traitement sur la surface à traiter (3).

3. Procédé pour le traitement de surface de pneus crus tel que revendiqué dans la revendication 2, comprenant la pulvérisation, à une pression supérieure ou égale à 0,5 bar (50 kPa), de ladite substance de traitement sur la surface à traiter (3).

4. Procédé pour le traitement de surface de pneus crus tel que revendiqué dans la revendication 1, comprenant l'établissement de ladite trajectoire d'application prédéfinie en fonction d'un ou de plusieurs des éléments suivants : la quantité de substance à appliquer, le type de surface à traiter (3), la position de la surface à traiter (3), le modèle de pneu cru.

5. Procédé pour le traitement de surface de pneus crus tel que revendiqué dans la revendication 4, comprenant la lecture d'un code à barres présent sur le pneu cru (2) et l'identification de caractéristiques du pneu lui-même, où ladite trajectoire prédéfinie est établie en fonction desdites caractéristiques du pneu cru (2) après la lecture dudit code à barres.

6. Procédé pour le traitement de surface de pneus crus tel que revendiqué dans la revendication 1, comprenant le positionnement, en contact avec ladite surface à traiter (3), d'un applicateur (10) dudit dispositif d'application (8) configuré pour distribuer la substance de traitement pulvérisée.

7. Procédé pour le traitement de surface de pneus crus tel que revendiqué dans la revendication 1, comprenant le positionnement dudit dispositif d'application (8) à une distance d'application spécifique par rapport à ladite surface à traiter (3) du pneu cru (2), appropriée pour placer, en contact avec ladite surface à traiter (3), un applicateur (10) dudit dispositif d'application (8) configuré pour distribuer la substance de traitement pulvérisée.

8. Procédé pour le traitement de surface de pneus crus tel que revendiqué dans la revendication 1, comprenant le positionnement, à une distance de pulvérisation spécifique par rapport à ladite surface à traiter (3), d'une buse (9) dudit dispositif d'application (8) configurée pour pulvériser ladite substance de traitement à basse pression.

9. Procédé pour le traitement de surface de pneus crus tel que revendiqué dans la revendication 1, comprenant le positionnement dudit dispositif d'application (8) à une distance d'application spécifique par rapport à ladite surface à traiter (3) appropriée pour placer, à une distance de pulvérisation spécifique par rapport à ladite surface à traiter (3), une buse (9) dudit dispositif d'application (10) configurée pour pulvériser ladite substance de traitement à basse pression.

10. Procédé pour le traitement de surface de pneus crus tel que revendiqué dans la revendication 8 ou 9, comprenant l'établissement de la distance de pulvérisation de ladite buse (9) par rapport à ladite surface à traiter (3) en fonction d'un ou de plusieurs des éléments suivants : la quantité de substance à appliquer, le type de surface à traiter (3), la position de la surface à traiter (3), le modèle de pneu cru.

11. Procédé pour le traitement de surface de pneus crus tel que revendiqué dans la revendication 1, dans lequel la génération d'un mouvement relatif commandé entre ledit pneu cru (2) et ledit dispositif d'application (8) comprend la génération d'un avancement relatif dudit dispositif d'application (8) et dudit pneu cru (2) ayant au moins une composante de vitesse d'avancement local (V) parallèle à un axe de rotation (5) du pneu cru (2) et dans lequel ladite composante de vitesse d'avancement local (V) parallèle à un axe de rotation (5) du pneu cru (2) a une direction d'avancement coïncidant avec une direction de dépôt d'un élément allongé continu (4) d'un composant dudit pneu cru (2) qui forme la surface à traiter (3).

12. Procédé pour le traitement de surface de pneus crus tel que revendiqué dans la revendication 1, dans lequel ladite surface à traiter (3) est une surface radialement interne dudit pneu cru (2) comprenant un calandrage intérieur obtenu par le dépôt d'éléments allongés continus (4) qui sont mutuellement côte à côte sur un tambour de formation.

13. Appareil pour le traitement de surface (1) de pneus crus comprenant :
un support (6) pour un pneu cru (2) dans lequel ledit pneu cru (2) comprend au moins une surface à traiter (3),
un dispositif d'application (8) approprié pour appliquer une substance de traitement semi-permanente,
un élément de support (11) pour ledit dispositif d'application (8),
des dispositifs pour générer un mouvement relatif commandé entre ledit pneu cru (2) et ledit dispositif d'application (8) de manière à appliquer ladite substance de traitement sur ladite surface à traiter selon une trajectoire prédéfinie, au moyen dudit dispositif d'application,
dans lequel ledit dispositif d'application (8) comprend une buse (9) configurée pour pulvériser, à une pression inférieure à 1,5 bar (150 kPa), ladite substance de traitement sur la surface à traiter (3) et un applicateur (10) configuré pour distribuer la substance de traitement pulvérisée sur la surface à traiter (3).

14. Appareil pour le traitement de surface de pneus crus tel que revendiqué dans la revendication 13, dans lequel ladite buse (9) et ledit applicateur (10) sont solidaires l'un(e) de l'autre au moins lors du mouvement relatif commandé généré entre ledit pneu cru (2) et ledit dispositif d'application (8).

15. Appareil pour le traitement de surface de pneus crus tel que revendiqué dans la revendication 13, dans lequel ledit élément de support (11) comprend une patte de support (12) sur laquelle sont montés ladite buse (9) et ledit applicateur (10), ladite buse (9) étant agencée sur la partie avant dudit applicateur (10) selon une direction de mouvement relatif dudit dispositif d'application (8) par rapport audit pneu cru (2) pendant une rotation relative dudit pneu cru (2) et dudit dispositif d'application (8).
